# EUROPÄISCHE PATENTANMELDUNG

(11) **EP 4 199 564 A1**
(43) Veröffentlichungstag der Anmeldung: **21.06.2023**
(21) Anmeldenummer: 21215123.7
(22) Anmeldetag: 16.12.2021
(51) Int. Cl.: H04W 12/041, H04W 12/40, H04L 9/40, H04L 9/08, H04W 8/20

(54) **QUANTENSICHERE ÜBERTRAGUNG VON DATEN ÜBER MOBILFUNKNETZ**

(71) Anmelder: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Nern, Peter-Michael

(57) **Zusammenfassung**

Die Erfindung betrifft die gesicherte Übertragung von Daten, welche zwischen einer mit einem Subscriber Identity Module SIM ausgestatteten Mobilfunkendeinrichtung über mindestens ein Mobilfunknetz mit einer Gegenstelle ausgetauscht werden. Die Daten werden dazu mittels eines gemeinsamen Anwendungsschlüssels quantensicher symmetrisch verschlüsselt. Gemäß der vorgeschlagenen Lösung wird der gemeinsame, das heißt identische Anwendungsschlüssel jeweils lokal sowohl durch die Mobilfunkendeinrichtung als auch durch die Gegenstelle erzeugt. Hierfür werden die Mobilfunkendeinrichtung und die Gegenstelle zuvor mit einem durch eine Bitfolge repräsentierten Shared Secret, nämlich mit einem gemeinsamen Geheimnis ausgestattet, welches bei der Mobilfunkendeinrichtung in deren SIM gespeichert wird. Die Mobilfunkendeinrichtung und die Gegenstelle erzeugen den gemeinsamen Anwendungsschlüssel voneinander unabhängig, indem sie dieselbe von einer Entropiequelle über das mindestens eine Mobilfunknetz empfangene Zufallszahl lokal in identischer Weise, das heißt gemäß derselben Vorschrift, mit dem Shared Secret verrechnen und damit diese Zufallszahl in den quantensicheren gemeinsamen Anwendungsschlüssel überführen.

## Beschreibung

Die Erfindung betrifft eine technische Lösung zur gesicherten Übertragung von Daten, welche zwischen einer mit einem Subscriber Identity Module SIM ausgestatteten Mobilfunkendeinrichtung über mindestens ein Mobilfunknetz mit einer Gegenstelle ausgetauscht werden. Sie bezieht sich hierbei insbesondere darauf, auch Mobilfunkendeinrichtungen die Nutzung quantensicherer Anwendungsschlüssel für eine symmetrische Verschlüsselung zwischen ihnen und einer Gegenstelle ausgetauschter Daten zu ermöglichen. Gegenstände der Erfindung sind ein dies ermöglichendes Verfahren und ein zur Durchführung dieses Verfahrens ausgebildetes System.

Bei einer entsprechenden Mobilfunkendeinrichtung kann es sich um eine selbst mobile Einrichtung, also um ein mobiles Endgerät, wie beispielsweise ein Smartphone oder ein Tablet-PC, handeln. Jedoch sind darüber hinaus von der Erfindung auch Einrichtungen umfasst, welche selbst nur indirekt mobil oder auch quasistationär sind, aber unabhängig davon Daten mit einer Gegenstelle über mindestens ein Mobilfunknetz austauschen und hierfür mit einem SIM (Subsciber Identiy Module) ausgestattet sind. Unabhängig von der jeweiligen Art der die Erfindung nutzenden Mobilfunkendeinrichtung handelt es sich bei dieser jedenfalls stets um eine über ein SIM verfügende Einrichtung. Mit Blick auf die, wie vorstehend erwähnt, mögliche Ausbildung der Mobilfunkendeinrichtung als quasistationäre Einrichtung kann das SIM, zum Beispiel im Zusammenhang mit mobilfunkfähigen Einrichtungen des Internet of Things (loT), in der Mobilfunkendeirichtung auch festverbaut sein. Von der Erfindung umfasst sein soll darüber hinaus auch die Möglichkeit der Ausstattung der Mobilfunkendeinrichtung mit einer eSIM (embedded SIM), welche in diesem Kontext, in der Art eines Softwarecontainers, unter anderem zur Aufnahme eines Shared Secret ausgebildet ist.

Der Absicherung der Infrastruktur öffentlicher Netze, so auch der Mobilfunknetze, sowie der über diese Netze ausgetauschten Daten gegen potenzielle Angriffe und Manipulationen kommt eine auch weiterhin stark steigende Bedeutung zu. Ein wesentlicher Teil dieser Absicherung geschieht durch die Verschlüsselung der als Teil der Infrastruktur von Netzwerken anzusehenden, die Kommunikation und die Datenverkehre managenden Steuerdaten und der über die Netzwerke übertragenen Nutzdaten der Kommunikationsteilnehmer. Für die Verschlüsselung entsprechender Daten ist eine Vielzahl von Verschlüsselungsmechanismen bekannt geworden, welche sich im Wesentlichen in die Kategorien asymmetrische Verschlüsselung und symmetrische Verschlüsselung unterteilen lassen.

Bei der asymmetrischen Verschlüsselung wird für die Verschlüsselung der Daten ein allen dazu berechtigten Kommunikationsteilnehmern bekannter öffentlicher Schlüssel verwendet, wohingegen zur späteren Entschlüsselung der solchermaßen verschlüsselten Daten ein privater Schlüssel eines die mit seinem öffentlichen Schlüssel verschlüsselten Daten empfangenden Teilnehmers, respektive einer Einrichtung, verwendet wird, welcher dort zuvor als Teil eines den öffentlichen und den privaten Schlüssel umfassenden Schlüsselpaares erzeugt wurde.

Vor dem Hintergrund der voranschreitenden Entwicklung von Quantencomputern ist jedoch davon auszugehen, dass insbesondere asymmetrische Verschlüsselungsverfahren künftig nicht mehr sicher genug sind. Deutlich sicherer als die asymmetrische Verschlüsselung sind symmetrische Verschlüsselungsverfahren, bei denen für die Verschlüsselung der Daten und für deren spätere Entschlüsselung jeweils derselbe geheime Schlüssel verwendet wird. Ein Problem der symmetrischen Verschlüsselung ist es jedoch, den vorgenannten geheimen Schlüssel an die zu seiner Benutzung berechtigten Einheiten und/oder Teilnehmer zu verteilen, ohne dass hierbei der geheime Schlüssel in die Hände unbefugter, respektive potenzieller Angreifer gelangt.

Neue Möglichkeiten für die Verteilung zur symmetrischen Verschlüsselung verwendbarer geheimer Schlüssel bietet insoweit die Quantenkryptografie. Diese macht es möglich, Schlüssel mit sehr hoher Entropie, das heißt tatsächlich zufälliger Art, zu generieren und diese angriffssicher an mehrere Teilnehmer und/oder Einrichtungen zu verteilen. Hierbei ermöglichen es Verfahren der Quantum Key Distribution (QKD) entsprechende Schlüssel hoher Entropie an zumindest zwei voneinander entfernten Orten gewissermaßen gleichzeitig bereitzustellen, und zwar in der Weise, dass jeder Versuch eines Angriffs auf derartige Schlüssel während des Erzeugungsvorgangs unmittelbar erkannt wird, also nicht verdeckt bleiben kann. Hierfür bedarf es jedoch eines Quantenkanals, das heißt eines Kanals zur Übertragung quantenmechanischer Zustände, zwischen den beteiligten Teilnehmern, respektive deren die Schlüssel verwendenden Einrichtungen.

Allerdings resultieren aus den für die Anwendung von QKD-Verfahren bestehenden Erfordernissen auch Nachteile für diese Technologie. So ist die Reichweite der erforderlichen Quantenkanäle, jedenfalls soweit diese physisch durch typischerweise dafür auch in den Kernnetzen des Mobilfunks verwendete Glasfasern realisiert werden, sehr begrenzt. Die mögliche Reichweite beträgt hierbei typischerweise zirka 100 km, allenfalls wenige 100 km, jedoch nach derzeitigem Stand nicht 1000 km oder mehr. Dies resultiert aus der Dämpfung, welcher die über die Quantenkanäle (Lichtleitfasern) übertragenen quantenmechanischen Zustände unterworfen sind. Auf der anderen Seite ist Prinzip bedingt ein Einsatz von Verstärkern innerhalb der Quantenkanäle nicht möglich, da die Verstärkung entsprechender quantenmechanische Zustände transportierender Signale deren Auslesen erforderlich macht, was unmittelbar zu einer Zerstörung dieser quantenmechanischen Zustände führen würde. Ein weiterer wesentlicher Nachteil besteht darin, dass Systeme und Einrichtungen für den Einsatz der QKD-Technologie sehr teuer sind.

Es sind daher spezielle Lösungen erforderlich, um auch Netzelementen, welche beispielsweise aufgrund der Entfernung direkt nicht über einen Quantenkanal mit anderen Netzelementen verbunden sind oder aus Kostengründen selbst nicht mit Einrichtungen zur Erzeugung von Quantenschlüsseln ausgestattet werden können, quantensichere Schlüssel, das heißt Schlüssel hoher Entropie, zur Verfügung zu stellen. Eine Möglichkeit besteht dabei darin, die Schlüssel mit Hilfe einer über quantenmechanische Mittel verfügenden Einrichtung, wie beispielsweise eines Quantum Random Number Generator (QRNG), zu erzeugen und diese Schlüssel unter Einsatz ebenfalls als sehr sicher anzusehender Verschlüsselungsverfahren an die sie für den späteren Einsatz benötigenden Netzelemente zu übermitteln.

Jedoch besteht hierbei das Risiko, dass ein entsprechender quantensicherer Schlüssel bei seiner über ein Netzwerk erfolgenden Übermittlung an ein für seinen Empfang bestimmtes Netzelement abgefangen werden könnte. Die Folge wäre, dass eine später unter Verwendung dieses Schlüssels erfolgende verschlüsselte Kommunikation, wie beispielsweise der verschlüsselte Austausch die Netzinfrastruktur betreffender Steuerdaten oder von Nutzdaten, auch nicht mehr sicher ist, wobei dies möglicherweise zudem durch die berechtigten Teilnehmer zunächst längere Zeit gar nicht bemerkt wird.

Aus den vorgenannten Gründen, nämlich insbesondere wegen der hohen Kosten, ist davon auszugehen, dass die Nutzung von QKD-Verfahren und der dafür erforderlichen Technik im Wesentlichen auf die Infrastruktur der Kernnetze und allenfalls noch auf die Zugangsnetze der Provider sowie auf spezielle Anwendungen, wie Applikationen zum Datenaustausch zwischen Banken, im Versicherungswesen oder zwischen Servern staatlicher Einrichtungen oder Behörden, beschränkt bleiben wird. Demnach werden Mobilfunkendeinrichtungen, insbesondere auch mobile Endgeräte, wie Smartphones oder Tablett-PCs, in absehbarer Zeit wohl nicht unmittelbar von der QKD-Technik profitieren. Dennoch besteht auch in Verbindung mit Ihrer Nutzung ein dringender Bedarf an einer sicheren, respektive quantensicheren Datenübertragung. Dies gilt zumal Industriegüter oder hochwertige Konsumgüter in denen Mobilfunkendeinrichtungen beispielsweise im Rahmen der Car-to-Car-, respektive der Car-to-X-Kommunikation, der Industrie 4.0 oder des IoT (Internet of Things) zum Einsatz gelangen häufig über lange Zeiträume genutzt werden, so dass diese vorzugsweise bereits jetzt dazu ertüchtigt werden sollten, auch einem Angriff mit Quantencomputern auf von ihnen versendete oder empfange Daten, das heißt Nutz- oder Steuerdaten, widerstehen zu können.

Aufgabe der Erfindung ist es, eine Lösung bereitzustellen, durch welche es auch Mobilfunkendeinrichtungen ermöglicht wird, mit einer Gegenstelle über mindestens ein Mobilfunknetz ausgetauschte Daten symmetrisch unter Verwendung eines quantensicheren Schlüssels (Anwendungsschlüssel) zu verschlüsseln. Hierfür sind ein entsprechendes Verfahren anzugeben und ein zur Durchführung dieses Verfahrens in geeignete Weise ausgebildetes System bereitzustellen.

Die Aufgabe wird durch ein Verfahren mit den Merkmalen des Patentanspruchs 1 gelöst. Ein die Aufgabe lösendes, zur Durchführung des Verfahrens ausgebildetes System wird durch den ersten Sachanspruch charakterisiert. Vorteilhafte Aus- und Weiterbildungen sind durch die jeweiligen Unteransprüche gegeben.

Das nachfolgend vorgestellte Verfahren zur gesicherten Übertragung von Daten geht von einer Konfiguration aus, bei der eine mit einem Subscriber Identity Module (SIM) ausgestattete Mobilfunkendeinrichtung über mindestens ein Mobilfunknetz Daten mit einer Gegenstelle austauscht. Dabei werden die zwischen der Mobilfunkendeinrichtung und der Gegenstelle ausgetauschten Daten mittels eines quantensicheren gemeinsamen Anwendungsschlüssels symmetrisch verschlüsselt. Durch das vorgeschlagenen Verfahren wird hierbei der Mobilfunkendeinrichtung und ihrer Gegenstelle eine quantensichere symmetrische Verschlüsselung der zwischen ihnen ausgetauschten Daten ermöglicht, obwohl diese, also die Mobilfunkendeinrichtung und ihre Gegenstelle, selbst nicht über Mittel zum Generieren quantensicherer Schlüssel, wie beispielsweise Mittel zur Nutzung eines Verfahrens der Quantum Key Distribution (QKD) oder einen Quantum Random Number Generator (QRNG), verfügen.

Gemäß dem Verfahren werden dazu die Mobilfunkendeinrichtung und die Gegenstelle mit einem durch eine Zahl, respektive eine Bitfolge repräsentierten Shared Secret (im Weiteren teilweise verkürzend auch nur als "Secret" bezeichnet), also mit einem vorverteilten gemeinsamen Geheimnis ausgestattet. Seitens der Mobilfunkendeinrichtung wird dieses Shared Secret in deren SIM gespeichert. Gemäß dem Verfahren wird das sowohl bei der Mobilfunkendeinrichtung als auch bei der Gegenstelle vorliegende gemeinsame, also identische Shared Secret zur lokalen Erzeugung des später von ihnen zur symmetrischen Verschlüsselung zwischen ihnen auszutauschender Daten genutzten gemeinsamen Anwendungsschlüssels verwendet.

Im Hinblick auf die zuvor oder auch nachfolgend verwendeten Begriffe "Zahl", welche zum Beispiel ein Shared Secret oder einen quantensicheren Schlüssel repräsentiert, oder "Zufallszahl" sei an dieser Stelle darauf hingewiesen, dass es sich hierbei nicht um Zahlen im mathematischen Sinne, sondern im Sinne der IT handelt, also um Bitfolgen, welche sich zum Beispiel als Dualzahl oder Hexadezimal darstellen lassen, aber beispielsweise nach der ASCII-Code-Tabelle auch einen oder mehrere Buchstaben oder eine Folge von Zahlen und Buchstaben kodieren können.

Die beidseits der Übertragungsstrecke voneinander unabhängig erfolgende Erzeugung des vorgenannten gemeinsamen quantensicheren Anwendungsschlüssels geschieht dabei, indem die Mobilfunkendeinrichtung und die Gegenstelle eine identische, durch sie von einer Entropiequelle über das Mobilfunknetz empfangene Zufallszahl in identischer Weise, nämlich beide jeweils gemäß derselben Vorschrift, mit dem Shared Secret verrechnen. Hierdurch wird die von der Mobilfunkendeinrichtung und der Gegenstelle von der Entropiequelle empfangene identische Zufallszahl lokal, nämlich gleichermaßen bei der Mobilfunkendeinrichtung und bei der Gegenstelle, in den quantensicheren gemeinsamen Anwendungsschlüssel überführt, ohne dass dieser gemeinsame Anwendungsschlüssel, beispielsweise im Zusammenhang mit einer irgendwie gearteten Verteilung an die Mobilfunkendeinrichtung einerseits und an die Gegenstelle andererseits, über öffentliche Netze übertragen würde und hierdurch offengelegt werden könnte. Dies ergibt sich daraus, dass über das Mobilfunknetz selbst, wie zuvor dargestellt, nur die durch eine (zentrale) Entropiequelle erzeugte Zufallszahl übertragen wird. Der eigentliche quantensichere, später zur symmetrischen Verschlüsselung zwischen der Mobilfunkendeinrichtung und der Gegenstelle zu übertagender

Daten verwendete Anwendungsschlüssel wird hingegen auf beiden Seiten (Mobilfunkendeinrichtung und Gegenstelle) voneinander unabhängig (unter Anwendung derselben Vorschrift) lokal erzeugt und somit nicht über das Mobilfunknetz übertragen.

Was die zuvor genannte Vorschrift anbelangt, gemäß welcher sowohl die Mobilfunkendeinrichtung als auch die Gegenstelle in identischer Weise die durch sie von der Entropiequelle empfangene identische Zufallszahl unter Nutzung des Shared Secret in den quantensicheren gemeinsamen Anwendungsschlüssel überführen, so kommen hierfür unterschiedliche Möglichkeiten in Betracht. Verallgemeinernd, das heißt diese unterschiedlichen Möglichkeiten zusammenfassend, kann man in diesem Zusammenhang auch von einer auf die von der Entropiequelle empfangene identische Zufallszahl unter Verwendung des Shared Secret angewendeten Key Derivation Function sprechen. Als eine mögliche, sehr einfache, allerdings mit Nachteilen behaftete Ausprägung einer solchen Key Derivation Function KDF kann es angesehen werden, wenn die Mobilfunkendeinrichtung und die Gegenstelle die durch sie von der Entropiequelle empfangene Zufallszahl bitweise XOR-verknüpfen mit dem bei ihnen vorliegenden, ebenfalls durch eine Zahl repräsentierten Shared Secret. Im Hinblick auf die einer bitweisen XOR-Verknüpfung anhaftenden Probleme (beispielsweise bei der Verknüpfung zweier identischer Zahlen oder von zwei Bitfolgen, bei denen alle einzelnen Bits einer der Bitfolgen invers zu den einzelnen Bits der anderen Bitfolge sind), sollte indessen vorzugsweise eine durch das NIST (National Institute of Standards and Technology) standardisierte KDF verwendet werden.

Eine Möglichkeit besteht beispielsweise in der - selbstverständlich auch in diesem Fall lokal und voneinander unabhängig sowohl in der Mobilfunkendeinrichtung als auch in der Gegenstelle erfolgenden - Anwendung eines mit einer Blockchiffre arbeitenden Verschlüsselungsverfahrens auf das Shared Secret, wobei die von der Entropiequelle empfangene Zufallszahl hierbei als Schlüssel verwendet wird. Das dabei entstehenden Chiffrat kann dann durch die Mobilfunkendeinrichtung und die Gegenstelle als gemeinsamer Anwendungsschlüssel zur symmetrischen Verschlüsselung zwischen ihnen auszutauschender Daten verwendet werden. Die Berechnung des quantensicheren gemeinsamen Anwendungsschlüssels mittels einer Blockchiffre kann beispielsweise unter Einsatz des AES, also des Advanced Encryption Standards, erfolgen. Darüber hinaus ist selbstverständlich die Anwendung anderer Verschlüsselungsverfahren entweder auf das Shared Secret unter Verwendung der Zufallszahl oder auf die Zufallszahl unter Verwendung des Shared Secret möglich, um auf diese Weise letztlich die Zufallszahl in einen quantensicheren Anwendungsschlüssel zu überführen.

Mit Blick auf die KDF (Key Derivation Function) sei in diesem Zusammenhang auch noch auf eine denkbare Modifizierung des Verfahrensablaufs hingewiesen, durch welche eine weitere Erhöhung der Sicherheit erreicht werden könnte. Demgemäß ist es denkbar, dass sowohl seitens der Mobilfunkendeinrichtung als auch der Gegenstelle ein gewisser Vorrat zur Umsetzung des Verfahrens verwendbarer KDFs implementiert wird. Beide Einrichtungen (Mobilfunkendeinrichtung und Gegenstelle) müssten sich dann (jeweils) zunächst darüber verständigen, welche KDF zur Erzeugung der gemeinsamen quantensicheren Schlüssel in Anwendung auf die von der Entropiequelle empfangenen Zufallszahlen verwendet werden soll.

Sofern es sich bei der Gegenstelle (wie später als Ausgestaltungsmöglichkeit zum System noch näher betrachtet) um eine Basisstation des mindestens einen Mobilfunknetzes handelt, ist es dabei denkbar, dass sich die Einrichtungen hierüber zum Beispiel mit der erstmaligen Inbetriebnahme des SIM in der Mobilfunkendeinrichtung und der erstmaligen Kontaktaufnahme der Mobilfunkendeinrichtung zu der Basisstation verständigen. Alternativ (sofern eine initial zu verwendende KDF eindeutig festgelegt ist) oder zusätzlich könnte die anzuwendende KDF (gegebenenfalls auch mehrfach), initiiert durch eine der beiden Netzwerkeinrichtungen, gewechselt werden, indem eine der Einrichtungen an die jeweils andere eine Nachricht mit einer Information über die fortan zu verwendende KDF übermittelt. Hierbei könnte außerdem die Art der jeweils verwendeten KDF (zum Beispiel durch eine Nummer) in kodierter Form in den Identifikatoren der mittels der jeweiligen KDF erzeugten Schlüssel angegeben werden. Auch wenn die Ausgestaltung der Art und Weise eines Wechsels der KDF selbstverständlich durch ein entsprechendes Protokoll genauestens geregelt werden kann, könnte durch eine solche Kodierung der verwendeten KDF in einem jeweiligen Identifikator sichergestellt werden, dass beide Netzwerkeinrichtungen stets die richtigen, nämlich auf identische Weise erzeugten und somit auch identischen Schlüssel verwenden und es nicht zu unnötigen Fehlversuchen einer durch Verschlüsselung gesicherten Kommunikation kommt.

Das zuvor angesprochene Shared Secret kann beispielsweise auf dem SIM der Mobilfunkendeinrichtung durch den Ausgeber des SIM - in der Regel ist dies der Betreiber des genannten mindestens einen Mobilfunknetzes - als Pre-shared Secret vorkonfiguriert werden. Wie später im Zusammenhang mit unterschiedlichen Konstellationen des die Aufgabe lösenden, zur Durchführung des Verfahrens geeigneten Systems ausgeführt werden soll, kann das Shared Secret der Mobilfunkendeinrichtung aber auch in anderer Weise bereitgestellt, respektive zwischen den dieses Shared Secret gemeinsam zur Erzeugung identischer quantensicherer Schlüssel aus Zufallszahlen der Entropiequelle nutzenden Einheiten/Einrichtungen verteilt werden.

Vorzugsweise ist das Verfahren so ausgestaltet, dass die Mobilfunkendeinrichtung und die Gegenstelle für die symmetrische Verschlüsselung der zwischen ihnen auszutauschenden Daten nicht dauerhaft denselben quantensicheren Anwendungsschlüssel verwenden, sondern dieser nur für eine festgelegte Dauer oder für ein festgelegtes, zwischen den beiden Einrichtungen übertragenes Datenvolumen gültig bleibt. Das Verfahren läuft hierbei derart ab, dass die Mobilfunkendeinrichtung und die Gegenstelle
a.) von der Entropiequelle einen, nämlich denselben Entropie-Stream, das heißt einen Datenstrom aus Zufallszahlen hoher Entropie und aus jeweils eine dieser Zufallszahlen eineindeutig bezeichnenden Identifikatoren, empfangen,
b.) den bei ihnen eingehenden Entropie-Stream in danach bei ihnen jeweils identisch vorliegende Zufallszahlen gleicher Länge und in danach bei ihnen ebenfalls jeweils identisch vorliegende, eine jeweilige Zufallszahl eineindeutig bezeichnende Identifikatoren vereinzeln,
c.) fortwährend und in identischer Weise aus den durch Vereinzelung aus dem Entropie-Stream erhaltenen Zufallszahlen unter Anwendung des Shared Secret gemeinsame quantensichere Anwendungsschlüssel neu errechnen und diese temporär in einem gesicherten Speicherbereich speichern.

Von den gemäß c.) des vorstehenden Ablaufs erzeugten Anwendungsschlüsseln wird sowohl in der Mobilfunkendeinrichtung als auch Gegenstelle jeweils nur eine begrenzte Anzahl für eine spätere Verwendung zur symmetrischen Verschlüsselung zwischen diesen Einrichtungen über das mindestens eine Mobilfunknetz ausgetauschter Daten abgespeichert. Jeder der betreffenden Anwendungsschlüssel wird dabei jeweils zusammen mit dem die jeweils für seine Berechnung verwendete Zufallszahl und damit auch den jeweiligen quantensicheren Anwendungsschlüssel selbst eineindeutig bezeichnenden Identifikator abgespeichert.

Soweit bei der hier erfolgenden Beschreibung der Erfindung von Zufallszahlen als Teil eines Entropie-Streams und von Anwendungsschlüsseln sowie von deren Speicherung gesprochen wird, gehören zu diesen Zufallszahlen und Anwendungsschlüsseln immer auch mit ihnen korrespondierende, das heißt jeweils eine einzelne Zufallszahl, respektive einen einzelnen Anwendungsschlüssel eindeutig bezeichnende (identifizierende) Identifikatoren. Typischerweise entspricht dabei der einen Anwendungsschlüssel bezeichnende Identifikator dem Identifikator, der auch die Zufallszahl bezeichnet (eineindeutig identifiziert), aus welcher der betreffende Anwendungsschlüssel errechnet wurde. Dies gilt auch in Bezug auf die Patentansprüche, in denen die Identifikatoren aus Gründen der sprachlichen Vereinfachung nicht in jedem Falle explizit genannt werden, jedoch insoweit gedanklich mitzulesen sind.

Seitens der Mobilfunkendeinrichtung kann die Speicherung der jeweils aus dem Entropie-Stream errechneten quantensicheren Anwendungsschlüssel beispielsweise in deren Arbeitsspeicher, vorzugsweise aber in dem dafür in spezieller Weise, nämlich als Hardware-Sicherheits-Modul HSM /Hardware Security Module) ausgebildeten SIM erfolgen. Vorzugsweise ist hierbei in dem betreffenden SIM ferner eine App für das Management der erzeugten und im SIM gespeicherten quantensicheren Anwendungsschlüssel und ihres Einsatzes zur Verschlüsselung von Nutzdaten abgelegt. Auch eine App für die im Hintergrund erfolgende Erzeugung der quantensicheren Anwendungsschlüssel aus den bei der Mobilfunkendeinrichtung von der Entropiequelle eingehenden Zufallszahlen hoher Entropie kann in dem SIM abgelegt sein oder eine derartige Funktionalität durch die zuvor angesprochene App mit abgedeckt werden. Schließlich kann die Mobilfunkendeinrichtung mit einer gegebenenfalls in dem SIM gehaltenen App ausgestattet sein, welche es dem Nutzer der Mobilfunkendeinrichtung ermöglicht, durch ein entsprechendes Steuerkommando das SIM gewissermaßen zu klonen, das heißt dessen Inhalte (Shared Secret, Anwendungsschlüssel, Apps und dergleichen) PQ-verschlüsselt via Funk mit kurzer Reichweite (zum Beispiel Bluetooth) auf ein SIM eines anderen von ihm genutzten (Mobilfunk-) Endgerätes zu übertragen.

Ausdrücklich sei an dieser Stelle angemerkt, dass vom Begriff des Entropie-Streams auch die Möglichkeit einer fortwährenden, Aussendung jeweils nur einer neuen Zufallszahl mit zugehörigem Identifikator umfasst sein soll. Soweit also nachfolgend im Zusammenhang mit der Authentifizierung der Entropiequelle und der gesicherten Übertragung von dieser generierter Zufallszahlen hoher Entropie von Datensegmenten oder Datenpaketen des Entropie-Streams gesprochen wird kann ein entsprechendes Segment oder Paket auch nur aus einer Zufallszahl und dem zugehörigen, diese Zufallszahl eineindeutig bezeichnenden Identifikator (synonym auch Identifier oder ID) bestehen.

Vorzugsweise, nämlich aus sicherheitstechnischen Gründen - zumindest bei der Mobilfunkendeinrichtung wird es sich typischerweise nicht um eine speziell gesicherte Trusted Zone handeln - sollten beispielsweise nicht mehr als 10 Paare, bestehend aus Schlüssel und Identifier, temporär gespeichert werden. Die Anzahl der insoweit maximal zur Speicherung vorgesehenen Paare richtet sich selbstverständlich nach den jeweiligen Gegebenheiten (zum Beispiel Speicherplatz in einem HSM, respektive in dem SIM, sonstige Datenkapazitäten, vorgesehener zeitlicher Wechsel der Schlüssel, das heißt Nutzungsdauer, bei deren Verwendung). Die Speicherung der Anwendungsschlüssel und ihrer jeweiligen Identifikatoren (Identifier) ist dabei insoweit temporär, als ein jeweiliger Anwendungsschlüssel nur bis zu seiner Verwendung für die symmetrische Verschlüsselung zwischen der Mobilfunkendeinrichtung und der Gegenstelle ausgetauschter Daten und dem gegebenenfalls damit verbundenen Ablauf seiner Gültigkeit nach einer festgelegten Dauer oder der Übertragung eines festgelegten Datenvolumens gespeichert bleibt oder er als ältester von den zum Beispiel 10 Schlüsseln gelöscht wird, sobald ein neuer (11. Schlüssel) erzeugt und gespeichert wird.

Soweit durch die Mobilfunkendeinrichtung (und selbstverständlich ebenso durch die Gegenstelle) fortwährend neue quantensicheren Anwendungsschlüssel errechnet werden, könnte deren Speicherung nach dem FIFO-Prinzip (First In - First Out) erfolgen. Das heißt, es würde, um nicht mehr als beispielsweise 10 Paare von Anwendungsschlüsseln und zugehörigen Identifikatoren zu speichern, wie vorstehend bereits ausgeführt, jeweils der älteste Schlüssel verworfen, sobald wieder ein neuer Anwendungsschlüssel berechnet und abgespeichert wird.

Für die Mobilfunkendeinrichtung und die Gegenstelle, welche die Zufallszahl oder vorzugsweise den Entropie-Stream (nachfolgend soll, ausschließlich zur sprachlichen Vereinfachung, überwiegend von einem Entropie-Stream ausgegangen werden) und die mit diesem übermittelten Zufallszahlen hoher Entropie von der zentralen Entropiequelle empfangen sowie diese lokal jeweils in einen quantensicheren, später zur Verschlüsslung zwischen ihnen übertragener Daten verwendeten Anwendungsschlüssel überführen, ist es sehr wichtig, darauf vertrauen zu können, dass der bei ihnen eingehende Entropie-Stream tatsächlich von der dafür vorgesehenen Entropiequelle stammt und auf dem Übertragungsweg unverändert, respektive unverfälscht geblieben ist. In Weiterbildung des Verfahrens ist es daher vorgesehen, dass sich die die Zufallszahlen, das heißt den Entropie-Stream zur Verfügung stellende Entropiequelle gegenüber der Mobilfunkendeinrichtung und der Gegenstelle authentifiziert.

Die Authentifizierung erfolgt hierbei, indem die Entropiequelle jeweils einzelne Segmente oder Pakete der von ihr an die Mobilfunkendeinrichtung und die Gegenstelle übertragenen Daten mit Zufallszahlen und Identifikatoren nach einem PQC-Verfahren signiert oder mit diesen zusammen ein PQC-Zertifikat überträgt, welches den empfangenden Einrichtungen eine Überprüfung ihrer Authentizität ermöglicht. Ein solches PQC-Zertifikat kann dabei zusammen mit den Zufallszahlen oder vorzugsweise jeweils einmal beim Aufbau einer Verbindung zu der Entropiequelle an die die Verbindung aufbauende Einrichtung/Einheit (Mobilfunkendeinrichtung oder Gegenstelle) übertragen werden. Die Unveränderlichkeit des Entropie-Streams kann grundsätzlich mit vergleichsweise hoher Zuverlässigkeit bereits dadurch gewährleistet werden, dass der Datenverkehr im Mobilfunk ohnehin verschlüsselt wird.

Zur weiteren Erhöhung der Sicherheit kann es aber darüber hinaus vorgesehen sein, dass die Entropiequelle die von ihr ausgesendeten Daten mittels eines nach einem PQC-Verfahren erzeugten Schlüssels verschlüsselt, welchen die Entropiequelle einerseits und die Mobilfunkendeinrichtung sowie die Gegenstelle andererseits unter Anwendung eines Key Encapsulation Mechanismus nach einem Public-Key-Verfahren austauschen.

Eine weitere Möglichkeit, die Unveränderlichkeit des Entropie-Streams zu gewährleisten, besteht darin, dass die Mobilfunkendeinrichtung und die Gegenstelle über Segmente, respektive eine festgelegte Anzahl von der Entropiequelle ausgesendeter Datenpakete einen Hashwert, zum Beispiel eine Sha256-Summe, bilden und diesen Hashwert mit einem bei der Entropiequelle abgeforderten mittels derselben Hashfunktion über diese Datenpakete gebildeten Hashwert vergleichen. Nur im Falle einer Übereinstimmung der miteinander verglichenen Werte ist dabei garantiert, dass der empfangene Entropie-Stream unverändert geblieben ist.

Ist dies nicht der Fall, werden die entsprechenden Daten, das heißt die von ihnen umfassten Zufallszahlen und zugehörigen Identifikatoren, verworfen und somit nicht zur lokalen Erzeugung des quantensicheren Anwendungsschlüssels herangezogen. Außerdem wird in diesem Fall eine Notifikation an das Netz- und Key-Management gesendet, um die aufgetretene Korrumpierung bekannt zu machen, damit dieses weitere Schritte zur Fehleruntersuchung einleiten kann. Ungeachtet dessen würden in einem solchen Fall durch die Mobilfunkendeinrichtung und die Gegenstelle auch unterschiedliche Schlüssel erzeugt werden, wodurch die Korrumpierung der übertragenen Zufallszahlen und Identifikatoren ebenfalls bemerkt würde.

Unabhängig von den letztlich zur Authentifizierung der Entropiequelle sowie zur Überprüfung der Unversehrtheit der von ihr empfangenen Daten herangezogenen Verfahren sind hierfür selbstverständlich entsprechende Protokolle zu etablieren und in den beteiligten Einheiten, nämlich der Entropiequelle einerseits und der Mobilfunkendeinrichtung sowie der Gegenstelle andererseits, zu implementieren. Derartige Protokolle regeln dann unter anderem auch, wie viele Zufallszahlen hoher Entropie mit zugehörigen Identifikatoren durch die Entropiequelle en bloc unter Anwendung der jeweils für die Authentifizierung und die Übertragung der ausgewählten Sicherheitsverfahrens ausgesendet werden. Der entsprechend gesicherte Entropie-Stream wird vorzugsweise durch den Betreiber eines jeweiligen Mobilfunknetzwerks netzwerkweit über Managementkanäle dieses Netzwerks verteilt. Je nach Generation des Mobilfunknetzes kommen dazu verschiedene Kanäle in Frage.
1. In Mobilfunknetzen der zweiten Generation kann die Verteilung der Entropie (von der Entropiequelle ausgesendete Zufallszahlen) in Form von Nachrichten über einen Signalisierungskanal erfolgen. Die Nachrichten werden dazu in Blöcke von 160 Zeichen aufgeteilt und können dann als Textnachrichten (SMS) an die mobilen Endgeräte übermittelt werden.
2. Over The Air (OTA) Kanäle bieten die Möglichkeit über die Luftschnittstelle Einstellungen und Updates auf mobile Endgeräte zu übertragen. Beim klassischen OTA lassen sich E-Mails oder MMS (Bilder) auf die Mobilfunkendeinrichtung, wie beispielsweise ein mobiles Endgerät, übertragen.
3. Das modernere Firmware Over The Air (FOTA) bietet zudem die Möglichkeit drahtloser Firmware Updates, respektive der Konfiguration/Personalisierung von mobilen Applikationen. FOTA unterstützt neben den Mobilfunknetzen auch WiFi, Bluetooth oder NFC Netzwerke.

Ein die Aufgabe lösendes, zur Durchführung des zuvor dargestellten Verfahrens geeignetes System für die gesicherte Übertragung von Daten über mindestens ein Mobilfunknetz umfasst als wesentliche Komponenten, neben dem Mobilfunknetz selbst, eine mit einem Subscriber Identity Module SIM ausgestattete Mobilfunkendeinrichtung, eine Gegenstelle, mit welcher diese Mobilfunkendeinrichtung Daten unter Verwendung mittels des Verfahrens erzeugter quantensicherer Anwendungsschlüssel austauscht, und eine Entropiequelle, welche die zur Erzeugung der quantensicheren Anwendungsschlüssel verwendeten Zufallszahlen hoher Entropie generiert und über das Mobilfunknetz an die für ihre Empfang bestimmten Einrichtungen, insbesondere die Mobilfunkendeinrichtung und die Gegenstelle, überträgt. Hierbei sind die Mobilfunkendeinrichtung und die Gegenstelle mit einem durch eine Zahl, respektive eine Bitfolge repräsentierten gemeinsamen Geheimnis, nämlich mit einem identischen Shared Secret, ausgestattet. Seitens der Mobilfunkendeinrichtung ist dieses Shared Secret in deren SIM gespeichert. Die Mobilfunkendeinrichtung und die Gegenstelle sind ferner dazu ausgebildet, aus einer von der Entropiequelle bei ihnen über das mindestens eine Mobilfunknetz identisch eingehenden Zufallszahl hoher Entropie unter Verwendung des Shared Secret nach einer durch sie identisch angewendeten Vorschrift den quantensicheren Anwendungsschlüssel nach einem dafür vorgesehenen Key Derivation Verfahren zu errechnen.

Die Entropiequelle ist vorzugsweise in Form einer allen Netzteilnehmern zur Verfügung stehenden Cloud-Applikation oder eines zentralen, in dem, respektive für das mindesten eine(n) Mobilfunknetz zur Verfügung stehenden Service realisiert. Hardware-technisch kann es sich bei der Entropiequelle beispielsweise um einen Quantenzufallszahlengenerator (Quantum Random Number Generator - QRNG), einen Quantencomputer oder um eine gemeinsam mit einer anderen dafür ausgebildeten Einrichtung quantensichere Schlüssel nach einem QKD-Verfahren erzeugende und austauschende Einrichtung handeln. Im Zuge der letztgenannten Möglichkeit, also der Nutzung eines QKD-Systems als Entropiequelle wird gleichzeitig eine Integration des Mobilfunknetzes und mobiler Endpunkte in eine glasfaserbasierte Sicherheitsarchitektur realisiert.

Hierbei kann es auch vorgesehen sein, dass die Entropie der von dieser Entropiequelle erzeugten Zufallszahlen mithilfe dafür geeigneter Mittel fortwährend überprüft, die Entropiequelle also validiert wird. Die zentrale Entropiequelle, zum Beispiel ein Quantencomputer (QC) oder ein Quantenzufallszahlengenerator (QRNG) sendet über einen authentifizierten, unveränderlichen Kanal Entropie bestehend aus den Zufallszahlen (RND; RNDID an die Teilnehmer des Mobilfunknetzes. RND und RNDID stehen hier für eine der eigentlichen Schlüsselerzeugung (Anwendungsschlüssel) dienende Zufallszahl und eine ID dieser Zufallszahl, das heißt für deren Identifikator respektive Identifier. Die Authentifizierung der Verbindung wird über PQC Signaturalgorithmen oder PQC Zertifikate gewährleistet, die Unveränderlichkeit der Zufallszahlen über PQC Verschlüsselungsalgorithmen. Die Qualität der Zufallszahlen wird vorzugsweise über permanente Messungen validiert und bei Bedarf die Entropie der Zufallszahlen verbessert.

Seitens der Mobilfunkendeinrichtung konvertiert hierbei eine Applikation in deren SIM (zum Beispiel auf deren SIM-Karte) die Zufallszahlen RND des Entropie-Streams in die privaten, gemeinsam mit der Gegenstelle zu nutzenden Anwendungsschlüssel. Dazu werden wahlweise die mathematischen Methoden der Permutation, der AES Verschlüsselung oder andere verwendet. Die genannten mathematischen Verfahren benötigen hierzu das in dem SIM vorkonfigurierte, vorverteilten "Secret" (Pre-shared Secret). Dieses Secret wird im Zusammenhang mit der Ausführung der genannten mathematischen Methoden auf eine jeweilige Zufallszahl des Entropie-Streams angewendet und die betreffende Zufallszahl hierdurch in den quantensicheren Anwendungsschlüssel überführt.

Im Zusammenhang mit der Implementierung des Verfahrens für die Nutzung mit einem mobilen Endgerät, wie zum Beispiel einem Smartphone mit einem SIM in Form einer SIM-Karte, wird das Shared Secret beispielsweise vor Versendung der SIM-Karte an den Kunden auf der SIM-Karte als Pre-shared Secret vorkonfiguriert (analog zu ICCID oder IMEI). Somit ist das "Secret" an die SIM-Karte und nicht an eine Rufnummer oder einen Kunden-Identifier gebunden. Durch Austausch der SIM-Karte in ein anderes Gerät lässt sich somit auch die Kommunikation von anderen Endgeräten absichern. Mobilfunkseitig wird das "Secret" im Hinblick auf eine die Gegenstelle darstellende Basisstation im Home Location Register (HLR) / Visitor Location Register (VLR) gespeichert, um der netzseitigen Gegenstelle das Shared Secret zuteilen zu können.

Die für das vorgenannte mobile Endgerät (als Mobilfunkendeinrichtung) zur Verfügung gestellte SIM-Karte kann hierbei (im Verhältnis zu derzeit gebräuchlichen SIM-Karten) um folgende Funktionen ergänzt sein:
1. Speicherung eines Shared Secret zur Berechnung eines privaten gemeinsam mit einer Gegenstelle zu nutzenden Anwendungsschlüssels aus Zufallszahlen des Entropie-Streams.
2. Speicherung eines "PQC Signatur Schlüssels" zur Authentifizierung der Entropiequelle. Optional ist die Authentifizierung des Mobilfunknetzes ausreichend.
3. Speicherung eines "PQC Decryption Schlüssels" zur Entschlüsselung eines verschlüsselt übertragenen und durch die Mobilfunkendeinrichtung empfangenen Entropie-Streams. Optional ist die Verschlüsselung des Mobilfunknetzes ausreichend oder die Unveränderlichkeit des Entropie-Streams wird über Sha256-Summen erreicht.
4. Speicherung einer Applikation, die im Hintergrund die Konvertierung der Zufallszahlen des Entropie-Streams in private, gemeinsam mit der Gegenstelle zu nutzende Anwendungsschlüssel durchführt.
5. Speicherung der berechneten privaten Anwendungsschlüssel (mit zugehörigen Identifikatoren), die der späteren Verschlüsselung der Netzwerkverkehre dienen. Optional können diese quantensicheren privaten Anwendungsschlüssel auch nur im Hauptspeicher des mobilen Endgerätes vorgehalten werden. Hierbei sollten die privaten Anwendungsschlüssel in jedem Fall rollierend gewechselt werden, wobei der älteste private Anwendungsschlüssel gelöscht und durch einen neuen privaten Anwendungsschlüssel ersetzt wird. Dies folgt also dem FIFO-Prinzip, das heißt, First In - First Out.
6. Speicherung einer Applikation zum Management der erzeugten quantensicheren privaten Anwendungsschlüssel, welche eine Schnittstelle anbietet, um die privaten Anwendungsschlüssel den Applikationen, die auf der Mobilfunkendeinrichtung, respektive dem mobilen Endgerät installiert sind, bereitzustellen.

Das vorgestellte Verfahren ermöglicht es einer dafür entsprechend ausgebildeten Mobilfunkendeinrichtung, Daten mit unterschiedlichsten, dazu ebenfalls entsprechend ausgebildeten Netzeinrichtungen (Gegenstellen) eines Mobilfunknetzes symmetrisch verschlüsselt unter Verwendung eines quantensicheren Anwendungsschlüssels auszutauschen. Demgemäß kann es sich bei der Gegenstelle beispielsweise um eine entsprechend ausgestattete (also insbesondere über ein Shared Secret verfügende) und zur lokalen Schlüsselerzeugung gemäß dem Verfahren ausgebildete Basisstation des mindestens einen Mobilfunknetzes handeln.

Ferner kann es sich bei der Gegenstelle um einen Applikationsserver handeln, mit welchem die Mobilfunkendeinrichtung Daten im Rahmen der Nutzung durch diesen Applikationsserver bereitgestellter Applikation (Apps) austauscht, wobei diese Daten zur Übertragung symmetrisch mittels eines gemeinsamen quantensicheren Schlüssels (Anwendungsschlüssel) der Mobilfunkendeinrichtung und des Applikationsservers verschlüsselt werden. Gemäß dem Grundgedanken der Erfindung bedienen sich hierbei die Mobilfunkendeinrichtung und der Applikationsserver zur Erzeugung der gemeinsam genutzten quantensicheren Schlüssel ebenfalls eines Shared Secret, welches sie nach einer identischen Vorschrift auf dieselben durch sie von der Entropiequelle empfangenen Zufallszahlen anwenden.

Dieses in dem SIM der Mobilfunkendeinrichtung zu hinterlegende Shared Secret wird dabei im Zusammenhang mit einer mittels der Mobilfunkendeirichtung erfolgenden Einrichtung eines Accounts zur Nutzung der durch den Applikationsserver bereitgestellten Programmanwendung ausgetauscht. Es kann beispielsweise dem Nutzer der Mobilfunkendeinrichtung sowie der betreffenden Applikation durch den Betreiber der entsprechenden Plattform (Anbieter, welcher die Applikation über die auf dem Applikationsserver gehostete Applikationsplattform bereitstellt) nach der Einrichtung des Accounts für die Nutzung der Programmanwendung, respektive App, in Form eines in die Mobilfunkendeinrichtung zu übernehmenden Codes auf dem Postweg zugesandt werden. Denkbar ist es aber auch, dass das Shared Secret in der Mobilfunkendeinrichtung und auf dem Applikationsserver aus durch den Kunden (Nutzer/Verwender der Mobilfunkendeinrichtung) bei der erstmaligen Nutzung der App zur Einrichtung des Accounts festgelegten Login-Daten in identischer (in der zuvor mittels der Mobilfunkendeinrichtung heruntergeladenen App festgelegter) Weise berechnet wird. Immerhin werden hierbei - ohnehin Ende-zu-Ende verschlüsselt - lediglich die Login-Daten und nicht das Shared Secret selbst, über das Mobilfunknetz übertragen.

Selbstverständlich kann es sich bei der Gegenstelle letztlich aber auch um eine vergleichbar ausgebildete und ebenfalls mit einem Shared Secret in ihrem SIM ausgestattete, respektive auszustattende andere Mobilfunkendeinrichtung handeln. Dabei ist wenigstens eine der beiden Mobilfunkendeinrichtungen zumindest mit einer App, nämlich einer mobilen Applikation, zur Erzeugung eines Shared Secret und zur Präsentation dieses Shared Secret in Form eines ein- oder zweidimensionalen graphischen Codes ausgestattet. Die jeweils andere Mobilfunkendeinrichtung ist zumindest mit einer App zur Erfassung des ihr präsentierten graphischen Codes mittels einer Kamera und zur Dekodierung des graphischen Codes ausgestattet. Die betreffende Appbewirkt bei ihrer Ausführung zudem die unmittelbare Ablage des aus dem graphischen Code gewonnenen Shared Secret in dem SIM dieser anderen Mobilfunkendeinrichtung. Die zuletzt beschriebene Vorgehensweise ermöglicht es einer jeweiligen Mobilfunkendeinrichtung für den Zweck einer verschlüsselten Kommunikation zwischen unterschiedlichen Kommunikationspartnern zu differenzieren, indem mit jedem dieser Kommunikationspartner ein anderes Shared Secret vereinbart wird, so dass in dem Kommunikationsverhältnis zu jedem dieser Partner unterschiedliche gemeinsame Schlüssel aus demselben Entropie-Stream gebildet werden.

Wie bereits mehrfach ausgeführt, werden die gemäß dem Verfahren durch die Mobilfunkendeinrichtung lokal erzeugten quantensicheren Anwendungsschlüssel vorzugsweise in deren SIM abgelegt. Grundsätzlich können durch die Mobilfunkendeinrichtung ausgeführte Applikationen, seien es Applikationen der Telefonie oder auch Apps im Rahmen des IoT (Internet of Things), so ausgelegt sein, dass sie auf das Verfahren unterstützende Mobilfunkendeinrichtung selbstständig auf die in dem SIM abgespeicherten quantensicheren Schlüssel zugreifen und diese bei ihrem Einsatz, nämlich bei der Verschlüsselung an die Gegenstelle ausgesendeter Daten oder bei der Entschlüsselung von der Gegenstelle empfangener Daten handhaben.

Vorzugsweise ist es jedoch vorgesehen, dass die SIM der Mobilfunkendeinrichtung hier mit einer entsprechenden, standardisierten Schnittstelle ausgestattet wird. Allen durch die jeweilige Mobilfunkendeinrichtung ausgeführten Apps ist es dann möglich, über diese Schnittstelle einen jeweiligen Anwendungsschlüssel zur Verschlüsselung zu versendender oder zur Entschlüsselung empfangener Daten anzufordern.

Nachfolgend werden beispielhaft mögliche Verfahrensabläufe bei, insbesondere im Hinblick auf die Art der Gegenstelle, unterschiedlichen Konfigurationen des Systems etwas detaillierter dargestellt.

### Synchronisierung zwischen Mobilfunkendeinrichtung und Basisstation der Mobilfunkzelle

Im Mobilfunknetz bedarf es einer Gegenstelle, bis zu welcher die Verbindung quantensicher verschlüsselt wird. Die Gegenstelle empfängt ebenfalls den Entropie-Stream und wendet dasselbe Shared Secret, welches z.B. im HLR/VLR gespeichert wird, auf die Zufallszahlen der Entropiequelle an. Gegenstellen können der Server der Funkzelle des Netzbetreibers, ein Festnetzanschluss eines Netzbetreibers, der oder die anderen mobilen- oder festnetzseitigen Teilnehmer der Verbindungen entsprechend verschiedenen Applikationen sein (Telefonat, Konferenzschaltung, mobil oder Festnetz, SMS, MMS, Internet of Things (loT), Industrie 4.0, Sensorik, etc.) Das Netz muss für jeden Mobilfunkteilnehmer daher täglich mindestens einen neuen privaten Anwendungsschlüssel berechnen. Die Anwendung eines neuen Schlüssels wird beispielsweise zeitgesteuert und zu festgelegten Zeiten erfolgen. Zur Bestimmung eines neuen Anwendungsschlüssels wird ein Synchronisierungsprotokoll angewendet.
1. Die Mobilfunkendeinrichtung (zum Beispiel mobiles Endgerät) wählt zufällig einen privaten Anwendungsschlüssel aus den verfügbaren privaten Anwendungsschlüsselelementen aus.
2. Die Mobilfunkendeinrichtung schickt die ID (Identifikator) des privaten Anwendungsschlüssels an die Gegenstelle im Mobilfunknetz.
3. Die Gegenstelle sucht sich basierend auf der ID den passenden, bei ihr gespeicherten privaten Anwendungsschlüssel heraus.
4. Beide Endpunkte nutzen die identischen privaten Anwendungsschlüssel zur Verschlüsselung der Verkehre oder Anwendungen.

Die Verschlüsselung erfolgt entsprechend der Standards der jeweiligen Funknetzgeneration basierend auf dem neuen privaten Anwendungsschlüssel. Optional kann aber auch eine zusätzliche AES Verschlüsselung oder eine PQC-Verschlüsselung angewendet werden. Das Resultat ist eine quantensichere Übertragung ausgetauschter Daten/der Netzwerkverkehre zwischen der Mobilfunkendeinrichtung und den Gegenstellen in den Netzen. Die Initialisierung des Protokolls seitens der Gegenstelle im Mobilfunknetz ist ebenfalls möglich. In diesem Fall ändert sich das jeweilige Verhalten der zwei Komponenten entsprechend.

Mobilfunkendeinrichtungen, wie moderne Smartphones besitzen die Kapazitäten eine AES Verschlüsselung aller Verkehre leisten zu können. Idealerweise besitzen diese Geräte eine konfigurierbare Hardwareverschlüsselung, um die Arbeit verzögerungsfrei leisten zu können.

Das Verfahren ist hinsichtlich der Wechsel von Mobilfunkzellen transparent, weil in jeder Zelle des Providers dieselbe Entropie verteilt wird, das heißt dieselben Zufallszahlen von derselben Entropiequelle bezogen werden. Außerdem nutzt das Verfahren zur Verschlüsselung höhere Ebenen des OSI-Protokolls, so dass die Verschlüsselung mit einem netzseitigen Endpunkt mit dem "Hand Over" in eine andere Mobilfunkzelle weiterlaufen kann.

Wird jedoch der Netzwerkprovider gewechselt, so ist entscheidend, ob beide Netzwerkprovider dieselbe Entropie verteilen. Ist dies der Fall, so ist das dargestellte Verfahren auch für Mobilfunknetzwechsel transparent. Ist dies nicht der Fall, so müssen das Endgerät und die netzseitige Gegenstelle die alten privaten Anwendungsschlüssel verwerfen und über die in dem neuen Netzwerk verteilte Entropie neue private Anwendungsschlüssel berechnen. Die weitere Gültigkeit des dazu verwendeten Shared Secret kann zum Beispiel durch entsprechende Roaming-Vereinbarungen zwischen den Netzbetreibern gewährleistet werden.

Das dargestellte Verfahren muss nicht gesteuert werden. Alleinig die Transferrate der Entropie, die über das Netz verteilt wird, ist entscheidend. Schon ein einziges verteiltes Paar bestehend aus einem Identifikator und einer eineindeutig durch diesen bezeichneten Zufallszahl (RNDID, RND) reicht aus, um eine sichere Kommunikation aller Mobilfunkteilnehmer mit dem Mobilfunknetz zu erreichen.

### Synchronisierung zwischen Applikationsserver und Mobilfunkendeinrichtungen

Die Applikationen (mobile App), die in einer Mobilfunkendeinrichtung, respektive beispielsweise auf einem mobilen Endgerät installiert sind, nutzen eine Schnittstelle der SIM-Applikation, um auf die privaten Anwendungsschlüssel zugreifen zu können. Die Applikation können das folgende Protokoll nutzen, um mit ihrem Serverdienst, das heißt mit dem jeweiligen Applikationsserver als Gegenstelle, eine quantensichere Verbindung aufzubauen:
1. Die Applikation, ausgeführt durch die Mobilfunkendeinrichtung, zum Beispiel Endgerät A wählt zufällig einen privaten Anwendungsschlüssel aus den verfügbaren privaten Anwendungsschlüsselelementen aus, die über das API der SIM-Applikation bereitgestellt werden.
2. Die Applikation auf Endgerät A schickt die ID (den Identifikator) des gemeinsamen privaten Anwendungsschlüssels an den Applikationsserver B.
3. Applikationsserver B wählt auf seiner Seite den privaten Anwendungsschlüssel passend zur empfangenen Schlüssel-ID aus.
4. Beide Endpunkte nutzen die identischen gemeinsamen Anwendungsschlüssel zur Absicherung ihrer Kommunikation.

Der Applikationsserver B muss sich selbstverständlich vorher bei der Entropiequelle für den Bezug des Entropie-Streams registriert haben und dieselben Zufallszahlen wie die Mobilfunkendeinrichtung/das mobile Endgerät empfangen. Damit dieselben Shared Secrets zur Berechnung der Anwendungsschlüssel genutzt werden, benötigen die Applikationen eine Möglichkeit der Konfiguration desselben. Möglich ist dies beispielsweise mittels personalisierter Downloads einer Applikation aus den Webshops (Google Playstore, Apple iTunes) der Hersteller. Somit lassen sich der App eindeutige Shared Secrets beim Download mitgeben und sich diese seitens des Applikationsservers aktivieren und den richtigen Kunden zuordnen.

Stehen mehrere Entropie-Streams, respektive mehrere Entropiequellen, zur Verfügung, so muss der Entropie-Stream/die Entropiequelle anhand einer eindeutigen ID identifiziert werden. Diese Entropie-Stream-ID muss in den Synchronisationsprotokollen angegeben werden. Über verschiedene Entropie-Streams lassen sich Benutzergruppen trennen. So können zum Beispiel Polizei, Feuerwehr oder Nachrichtendienste einen zusätzlich eigenen privaten Entropie-Stream verwenden, um private Anwendungsschlüssel zu berechnen. Auch kann es globale, nationale, regionale oder urbane Entropie-Streams zur Absicherung unterschiedlicher Anwendungen geben.

### Synchronisierung zwischen zwei Mobilfunkendeinrichtungen

Mobilfunkendeinrichtungen (nachfolgend wird auf mobile Endgeräte Bezug genommen und verkürzend von Endgeräten gesprochen) können ihre Kommunikation untereinander absichern. Dazu wird das folgende Protokoll verwendet:
1. Die Kommunikationsapplikation auf Endgerät A wählt zufällig einen privaten Anwendungsschlüssel aus den verfügbaren privaten Anwendungsschlüsselelementen, die über das API (Application Interface) der SIM-Applikation bereitgestellt werden, aus.
2. Die Applikation auf Endgerät A schickt die ID des gemeinsamen privaten Anwendungsschlüssels an das Endgerät B.
3. Die Kommunikationsapplikation auf Endgerät B wählt auf dessen Seite den privaten Anwendungsschlüssel passend zur Schlüssel-ID aus.
4. Beide Endpunkte nutzen die identischen Anwendungsschlüssel zur Absicherung ihrer Kommunikation.

Somit lassen sich Video, Voice und Chat Kommunikation zwischen Teilnehmern individuell quantensicher verschlüsseln. Die Kommunikationsapplikationen benötigen dazu eine Nutzerschnittstelle, um dasselbe "Secret" auf beiden Seiten einstellen zu können. Dies kann erfolgen über
- eine Eingabeschnittstelle, indem zum Beispiel beide Teilnehmer dieselbe Folge von Buchstaben in ihre Kommunikationsapplikation eingeben,
- einen QR Code, der auf einem Endgerät eine Zufallszahl erstellt und vom anderen Endgerät abfotografiert wird, wobei beide Endgeräte dieselbe, aber ansonsten zufällige Zahl als "Secret" speichern,
- eine Bluetooth- oder NFC-Verbindung (aus Sicherheitsgründen Im Allgemeinen eine lokal beschränkte Verbindung als Verbindung kurzer Reichweite) zwischen zwei Endgeräten, deren Kommunikationsapplikationen ein "Secret" austauschen.

Das "Secret" (Shared Secret) wird jeweils über die SIM-Karten-Applikation auf der SIM-Karte des jeweiligen Endgerätes, also der Mobilfunkendeinrichtung gespeichert.

Über die vorstehend beschriebenen Anwendungen hinaus ist für die vorgestellte Erfindung bereits jetzt eine Vielzahl anderer Anwendungen bei Gütern des täglichen Lebens oder industriellen Anlagen mit einer Lebensdauer von mehr als 10 Jahren denkbar, also innerhalb eines Zeitraums in dem Quantencomputer wahrscheinlich in der Lage sein werden, heutige Sicherheitssysteme anzugreifen. Von diesen sollen wiederum beispielhaft einige genannt werden, jedoch ohne hierbei näher auf die jeweiligen Verfahrensabläufe einzugehen.

### Absicherung der Kommunikation mit Smart Cars

Eine signifikant hohe Anzahl von Rückrufaktionen von Autoherstellern zur Beseitigung von Software-Fehlern erfolgte in der Vergangenheit bereits häufiger. Um zu verhindern, dass bei jeder Korrektur der Software das Auto zurück in die Werkstätten gerufen werden muss, nutzen Automobilfirmen bereits die FOTA Schnittstelle, um die Steuergeräte (ECU) im Auto zu aktualisieren. Diese Updates schließen Sicherheitslücken bestehender Softwarekomponenten, ergänzen Funktionalität oder verbessern die Performance der Fahrzeugsoftware. Ein weiterer Anwendungsfall liegt in der Aktualisierung und Personalisierung der Infotainment Systeme des Autos, zum Beispiel bei der laufenden Aktualisierung von Kartenmaterial, der personifizierten Routensuche oder bei der Mitteilung des Aufenthaltsorts des Fahrzeugs.

Moderne Autos (aber auch andere Fahrzeuge und Transportmittel, wie Fahrräder, respektive E-Bikes, Schiffe oder Flugzeuge) verarbeiten immer größere Mengen von Daten, die von den intelligenten Bauteilen des Autos/Transportmittels generiert und von zentralen Logiken verarbeitet werden. Diese Daten haben auch einen Wert für die Autohersteller, respektive für die Hersteller der Transportmittel. Dazu müssen die Daten im Bedarfsfalle sicher aus dem Auto/dem Transportmittel zum Hersteller oder zu den Werkstätten transferiert werden.

Sind zum Beispiel entsprechende Automobile noch zu einem Zeitpunkt im Einsatz, zu dem Quantencomputer die Kommunikationssicherheit gefährden, so wäre eine (zuschaltbare) Methode zur Sicherung der drahtlosen Kommunikation erstrebenswert. Die hier beschriebene Erfindung löst genau dieses Problem. Das Telematik-Modul des Autos wird mit einer SIM-Karte ausgerüstet, welche mit einer Applikation bestückt ist, den Entropie-Stream von einer zentralen Entropiequelle des Mobilfunkanbieters zu beziehen. Die Applikation nutzt das auf der SIM-Karte vorkonfigurierte "Secret" (Shared Secret), um private Anwendungsschlüssel zu berechnen. Liegt herstellerseitig dasselbe "Secret" für das Auto vor, so kann die gesamte Flotte ihre Daten auch in quanten-unsicheren Zeiten sicher transferieren.

### Absicherung der Kommunikation mit Industrierobotern

Industrieroboter haben eine Lebenszeit von über 10 Jahren, sind extrem teuer und arbeiten zunehmend über drahtlose Kommunikationsprotokolle. Es ist essenziell für die Sicherheit der Anlagen in Zeiten möglicherweise quantenunterstützer Angriffe, dass keine unautorisierten Steuerbefehle die Anlagen stilllegen (gegebenenfalls auch teilweise) oder zerstören oder dass die Übertragung des betrieblichen Monitorings (Alarmmeldungen) oder von Qualitätssicherungsdaten (Bilder) störungsfrei und sicher funktioniert.

Die vorgestellte Lösung zeigt eine erweiterbare Methode auf, wie bestehende Anlagen, die zum Beispiel in einem Campusnetzwerk drahtlos operieren, geschützt werden können. Es wird eine spezielle SIM-Karte in das Telematik-Modul des Roboters eingebaut. Diese SIM-Karte besitzt eine Applikation zum Empfang des Entropie-Streams. Das "Secret" kann von der Firma, die den Roboter betreibt, auf ihre Bedürfnisse angepasst werden. So könnten alle Roboter in einem Werk dasselbe "Secret" konfigurieren, um eine Gruppenkommunikation zu ermöglichen. Die Gegenstellen, das heißt die Steuersysteme, Monitoring Systeme und Qualitätssicherungssysteme konfigurieren dasselbe "Secret", so dass die berechneten privaten Anwendungsschlüssel den Netzwerkverkehr beispielsweise über AES 256 quantensicher schützen können.

Für industrielle Kunden könnte eine lokale Entropiequelle auch in einem Edge-Cloud-System bereitgestellt werden, so dass eine lokale Lösung aufgebaut wird. So erhält jeder Campus einen lokalen Entropie-Stream. Die Edge-Cloud benötigt nur einen oder zwei QRNGs (Quantum Random Number Generator) zur Erzeugung der Entropie.

Abschließend sollen an dieser Stelle noch einige Sicherheitsbetrachtungen zu der vorgestellten Lösung, insbesondere aus der Sicht des Verfahrens, erfolgen.

Die Sicherheit des Verfahrens beruht auf:
1. Der Unveränderlichkeit des Entropie-Streams. Der Entropie-Stream muss nicht notwendigerweise geheim sein. Es bedarf vielmehr nur der Sicherstellung seiner Unveränderlichkeit. Diese "gelockerte" Anforderung resultiert aus der gemeinsamen, jeweils lokalen Veränderung der mit dem Entropie-Stream übertragenen Zufallszahlen beim jeweiligen Empfänger (Mobilfunkendeinrichtung und Gegenstelle). Technisch lässt sich die Unveränderlichkeit durch eine PQC-Verschlüsselung/PQC-Authentifizierung oder ein PQ-VPN herstellen, oder, alternativ durch die Kombination von Sha256-Summen und PQ-authentifizierten Endpunkten. Wird der Entropie-Stream dennoch korrumpiert, dann werden bei den Anwendern keine gleichen Schlüssel-IDs (Identifikatoren) vorliegen, oder es werden voneinander verschiedene Anwendungsschlüssel erzeugt und eine quantensichere Verbindung kann nicht aufgebaut werden. Dadurch ergibt sich eine automatische Sicherung des Verfahrens, wodurch korrumpierte Schlüssel nicht verwendet werden können. Gleichzeitig wird die Korrumpierung festgestellt.
2. Dem Geheimnis des vorverteilten Secret (Shared Secret). Das Shared Secret sollte ebenfalls eine hohe Entropie besitzen und muss in jedem Falle geheim bleiben, da mittels seiner die Zufallszahlen des Entropie-Streams in geheime quantensichere Anwendungsschlüssel überführt werden. Jeder Router sollte ein eindeutiges, geheimes, vorverteiltes Secret (Shared Secret) besitzen, um die Sicherheit und Eindeutigkeit des Endpunktes zu gewährleisten.
3. Der Speicherung der gemeinsamen privaten Anwendungsschlüssel. Die privaten Anwendungsschlüssel (mit zugehörigen Identifikatoren) müssen in gesicherten Umgebungen gehalten werden, um sie vor einem Zugriff Dritter zu schützen. Eine Speicherung sollte im SIM der Mobilfunkendeinrichtung, respektive in HLRs/VLRs erfolgen, oder auch als gesichertes Objekt im Hauptspeicher, welches kontinuierlich Anwendungsschlüssel speichert und verwirft (First In - First Out, rotierend).

Das dargestellte Verfahren verteilt gemeinsame private Anwendungsschlüssel in öffentlichen Netzwerkumgebungen, ohne sie selbst über das Netz auszutauschen. Der Anwendungsschlüssel, der die Netzwerkverkehre schützt, wird lokal im Endgerät, respektive bei der Gegenstelle im Netzwerk, das heißt bei Servern, Routern oder anderen Einrichtungen des Mobilfunks erzeugt, verarbeitet und gegebenenfalls gespeichert. Er wird nicht mehr durch ungesicherte Netze transferiert. Aus diesem Grund sind Technologien, wie Quantenschlüsselaustausch, nicht mehr notwendig. Die Qualität der zentral, durch QRNGs/Quantencomputer erzeugten Zufallszahlen, lässt sich vor dem Versand überprüfen und bei Bedarf verbessern.

Das dargestellte Verfahren schützt die Netzwerkverkehre, sofern sichergestellt wird, dass
- der Entropie-Stream von einer authentifizierten Quelle stammt,
- der Entropie-Stream unveränderlich ist,
- die vorverteilten Secrets (Shared Secret) und die lokal berechneten privaten Anwendungsschlüssel sicher verwahrt und vor Zugriffen Dritter manipulationssicher gespeichert werden,
- die Verteilung des Secrets als Shared Secret manipulationssicher (beispielsweise durch Dongles und mit mehreren Faktoren) erfolgt.

Da diese Anforderungen bereits heutzutage umsetzbar sind, beschreibt die vorgestellte technische Lösung ein disruptives, aber leicht umsetzbares Verfahren, nebst zugehörigem System zur quantensicheren Schlüsselverteilung in Mobilfunknetzen.

## Patentansprüche

1. Verfahren zur gesicherten Übertragung von Daten, welche zwischen einer mit einem Subscriber Identity Module SIM ausgestatteten Mobilfunkendeinrichtung über mindestens ein Mobilfunknetz mit einer Gegenstelle ausgetauscht werden, wobei die Daten dazu mittels eines gemeinsamen Anwendungsschlüssels quantensicher symmetrisch verschlüsselt werden, **dadurch gekennzeichnet, dass** der gemeinsame, das heißt identische Anwendungsschlüssel jeweils lokal sowohl durch die Mobilfunkendeinrichtung als auch durch die Gegenstelle erzeugt wird, wofür die Mobilfunkendeinrichtung und die Gegenstelle zuvor mit einem durch eine Bitfolge repräsentierten Shared Secret, nämlich mit einem gemeinsamen Geheimnis ausgestattet werden, welches bei der damit ausgestatteten Mobilfunkendeinrichtung in deren SIM gespeichert wird und dass die Mobilfunkendeinrichtung und die Gegenstelle voneinander unabhängig den gemeinsamen Anwendungsschlüssel erzeugen, indem sie eine Zufallszahl, nämlich dieselbe, durch sie von einer Entropiequelle über das mindestens eine Mobilfunknetz empfangene Zufallszahl in identischer Weise, das heißt gemäß derselben Vorschrift, mit dem Shared Secret verrechnen und damit diese Zufallszahl in den quantensicheren gemeinsamen Anwendungsschlüssel überführen.

2. Verfahren nach Anspruch 1, **dadurch gekennzeichnet, dass** das Shared Secret auf dem SIM der Mobilfunkendeinrichtung durch einen Ausgeber des SIM, wie insbesondere den Betreiber des mindestens einen Mobilfunknetzes als Pre-shared Secret vorkonfiguriert wird.

3. Verfahren nach Anspruch 1 oder 2, **dadurch gekennzeichnet, dass** der von der Mobilfunkendeinrichtung und von deren Gegenstelle zur Verschlüsselung zwischen ihnen über das mindestens eine Mobilfunknetz ausgetauschter Daten verwendete gemeinsame Anwendungsschlüssel nur für eine festgelegte Dauer oder für ein festgelegtes zwischen der Mobilfunkendeinrichtung und der Gegenstelle übertragenes Datenvolumen gültig bleibt, wobei die Mobilfunkendeinrichtung und die Gegenstelle
a.) von der Entropiequelle einen, das heißt jeweils denselben Entropie-Stream empfangen, nämlich einen Datenstrom aus Zufallszahlen und aus jeweils eine dieser Zufallszahlen eineindeutig bezeichnenden Identifikatoren,
b.) den bei ihnen eingehenden Entropie-Stream in danach bei der Mobilfunkendeinrichtung und bei der Gegenstelle jeweils identisch vorliegende Zufallszahlen gleicher Länge und jeweils eine dieser Zufallszahlen bezeichnende Identifikatoren vereinzeln,
c.) fortwährend und in identischer Weise aus den durch Vereinzelung aus dem Entropie-Stream erhaltenen Zufallszahlen unter Anwendung des Shared Secret quantensichere gemeinsame Anwendungsschlüssel neu errechnen, von denen sie eine begrenzte Anzahl temporär in einem gesicherten Speicherbereich speichern, wobei ein jeweiliger Anwendungsschlüssel jeweils zusammen mit dem Identifikator abgespeichert wird, welcher die für seine Berechnung verwendete Zufallszahl und damit auch den jeweils errechneten quantensicheren Anwendungsschlüssel selbst eineindeutig bezeichnet.

4. Verfahren nach Anspruch 3, **dadurch gekennzeichnet, dass** die berechneten Anwendungsschlüssel und die einen jeweiligen dieser Anwendungsschlüssel eineindeutig bezeichnenden Identifikatoren durch die Mobilfunkendeinrichtung temporär in dem dafür als Hardware-Sicherheits-Modul HSM ausgebildeten SIM der Mobilfunkendeinrichtung abgespeichert werden.

5. Verfahren nach einem der Ansprüche 1 bis 4, **dadurch gekennzeichnet, dass** sich die Entropiequelle gegenüber von ihr Zufallszahlen empfangenden Einrichtungen, insbesondere gegenüber der Mobilfunkendeinrichtung und der Gegenstelle, authentifiziert, indem sie die Zufallszahlen nach einem PQC-Verfahren, das heißt nach einem Verfahren der Post Quantum Cryptography, signiert oder an die Zufallszahlen empfangenden Einrichtungen zusammen mit den Zufallszahlen oder jeweils beim Aufbau einer Verbindung zu der Entropiequelle ein durch diese Einrichtungen überprüfbares PQC-Zertifikat überträgt.

6. Verfahren nach einem der Ansprüche 1 bis 5, **dadurch gekennzeichnet, dass** die Entropiequelle die ausgesendete Zufallszahl oder den Entropie-Stream symmetrisch verschlüsselt mit einem PQC-Schlüssel, nämlich mit einem nach einem PQC-Verfahren mit den die Zufallszahl oder den Entropie-Stream empfangenden Einrichtungen, insbesondere mit der Mobilfunkendeinrichtung und der Gegenstelle, ausgehandelten Schlüssel.

7. Verfahren nach einem der Ansprüche 1 bis 6, **dadurch gekennzeichnet, dass** die Mobilfunkendeinrichtung und die Gegenstelle auf die von der Entropiequelle empfangenen Entropiedaten, nämlich auf die Zufallszahl oder auf einen Datenblock des Zufallszahlen und zugehörige Identifikatoren enthaltenden Entropie-Streams, eine Hash-Funktion anwenden und durch einen Vergleich des dabei erhaltenen Ergebnisses mit einem, durch sie von der Entropiequelle abgeforderten, dort zu denselben Entropiedaten mittels derselben Hash-Funktion gebildeten sowie gespeicherten Hashwert die Unversehrtheit der empfangenen Entropiedaten überprüfen.

8. Verfahren einem der Ansprüche 3 bis 7, **dadurch gekennzeichnet, dass** netzweite Verteilung des Entropie-Streams über Managementkanäle des mindestens einen Mobilfunknetzes erfolgt.

9. System zur gesicherten Übertragung von Daten über mindestens ein Mobilfunknetz, mit einer mit einem Subscriber Identity Module SIM ausgestatteten Mobilfunkendeinrichtung und mit einer Gegenstelle, mit welcher die Mobilfunkendeinrichtung mittels quantensicherer Anwendungsschüssel symmetrisch verschlüsselte Daten über das mindestens eine Mobilfunknetz austauscht, **dadurch gekennzeichnet,**
- **dass** das System weiterhin eine Zufallszahlen generierende und aussendende Entropiequelle umfasst,
- **dass** die Mobilfunkendeinrichtung sowie die Gegenstelle dazu ausgebildet sind, aus von der Entropiequelle identisch bei ihnen über das mindestens eine Mobilfunknetz eingehenden Zufallszahlen unter Verwendung eines Shared Secret, nämlich eines durch eine Bitfolge repräsentierten, sowohl bei der Mobilfunkendeinrichtung als auch bei der Gegenstelle hinterlegten gemeinsamen Geheimnisses, nach einer durch sie identisch angewendeten Vorschrift die quantensicheren Anwendungsschlüssel zu errechnen sowie diese zur symmetrischen Verschlüsselung zwischen ihnen ausgetauschter Daten zu verwenden,
- **dass** die Mobilfunkendeirichtung mit einem Subscriber Identity Module SIM ausgestattet ist, in welchem das von einem Betreiber des mindestens einen Mobilfunknetzes vorkonfigurierte Shared Secret gespeichert ist.

10. System nach Anspruch 9, **dadurch gekennzeichnet, dass** die Mobilfunkendeinrichtung mit einem SIM ausgestattet ist, in welchem eine Applikation gespeichert ist, durch welche aus von der Entropiequelle bei der Mobilfunkeinrichtung eingehenden Zufallszahlen im Hintergrund, durch Anwendung des ebenfalls in dem SIM gespeicherten Shared Secret auf diese Zufallszahlen, in der Mobilfunkendeinrichtung temporär gespeicherte quantensichere Anwendungsschlüssel erzeugt werden.

11. System nach Anspruch 9 oder 10, **dadurch gekennzeichnet, dass** die Mobilfunkendeinrichtung mit einem SIM ausgestattet ist, welches als ein Hardware-Sicherheits-Modul HSM ausgebildet ist, in welchem außer dem Shared Secret temporär unter Anwendung dieses Shared Secret erzeugte quantensichere Anwendungsschlüssel gespeichert werden.

12. System nach Anspruch 9 oder 11, **dadurch gekennzeichnet, dass** in dem SIM, mit welchem die Mobilfunkendeinrichtung ausgestattet ist, eine App zum Management der erzeugten quantensicheren Anwendungsschlüssel und ihres Einsatzes abgelegt ist.

13. System nach einem der Ansprüche 9 bis 12, **dadurch gekennzeichnet, dass** es sich bei der Gegenstelle um eine Basisstation des mindestens einen Mobilfunknetzes handelt.

14. System nach einem der Ansprüche 9 bis 12, **dadurch gekennzeichnet, dass** es sich bei der Gegenstelle um einen Applikationsserver handelt, mit welchem die Mobilfunkendeinrichtung die jeweils mittels eines Anwendungsschlüssels symmetrisch verschlüsselten Daten bei der Nutzung einer durch eine Verarbeitungseinrichtung der Mobilfunkendeinrichtung verarbeiteten Programmanwendung, wie einer App, austauscht, wobei das in dem SIM der Mobilfunkendeinrichtung zur Erzeugung quantensicherer Anwendungsschlüssel zu hinterlegende Shared Secret zwischen der Mobilfunkendeinrichtung und dem Applikationsserver als deren gemeinsames Geheimnis im Zusammenhang mit einer mittels der Mobilfunkendeirichtung erfolgenden Einrichtung eines Accounts zur Nutzung der durch den Applikationsserver bereitgestellten Programmanwendung ausgetauscht wird.

15. System nach einem der Ansprüche 9 bis 12, **dadurch gekennzeichnet, dass** es sich bei der Gegenstelle um eine andere, ebenfalls mit einem SIM zur Speicherung des Shared Secret für die Erzeugung quantensicherer Anwendungsschlüssel ausgestattete Mobilfunkendeinrichtung handelt, wobei mindestens eine der beiden Mobilfunkendeinrichtungen mit einer App, nämlich einer mobilen Applikation, zur Erzeugung eines Shared Secret und zur Präsentation dieses Shared Secret in Form eines ein- oder zweidimensionalen graphischen Codes und die jeweils andere Mobilfunkendeinrichtung mit einer App zur Erfassung des ihr präsentierten graphischen Codes mittels einer Kamera dieser anderen Mobilfunkendeinrichtung und zur Dekodierung des graphischen Codes sowie zur unmittelbaren Ablage des aus dem graphischen Code gewonnenen Shared Secret in dem SIM dieser anderen Mobilfunkendeinrichtung ausgestattet ist.

16. System nach einem der Ansprüche 9 bis 15, **dadurch gekennzeichnet, dass** Entropiequelle in Form einer über das mindestens eine Mobilfunknetz nutzbaren Cloud-Applikation oder eines zentralen Service in dem mindestens einen Mobilfunknetz ausgebildet ist.

17. System nach einem der Ansprüche 9 bis 15, **dadurch gekennzeichnet, dass** es sich bei der Entropiequelle um eine Netzwerkeinrichtung handelt, welche mit einer anderen Netzwerkeinrichtung über einen Quantenkanal verbunden ist und als Zufallszahlen an die Mobilfunkendeinrichtung und die Gegenstelle ausgesendete Schlüssel gemeinsam mit dieser anderen Netzwerkeinrichtung nach einem QKD-Verfahren, nämlich nach einem Verfahren der Quantum Key Distribution, erzeugt und austauscht.

18. System nach einem der Ansprüche 9 bis 15, **dadurch gekennzeichnet, dass** es sich bei der Entropiequelle um einen Quantum Random Number Generator QRNG oder um einen Quantencomputer handelt.
